# EUROPEAN PATENT APPLICATION

(11) **EP 2 639 714 A1**
(43) Date of publication of application: **18.09.2013**
(21) Application number: 12852434.5
(22) Date of filing: 10.12.2012
(51) Int. Cl.: G06F 17/30, G06Q 30/02

(54) **INFORMATION COLLECTION DEVICE, SYSTEM, METHOD, AND PROGRAM**

(30) Priority: 13.12.2011 JP 2011272448
(71) Applicant: NEC Corporation, Tokyo 108-8001 (JP)
(72) Inventor: The designation of the inventor has not yet been filed
(74) Representative: Vossius & Partner
(86) International application number: PCT/JP2012/082587
(87) International publication number: WO 2013/089259

(57) **Abstract**

An information collection device, system, method and program which can prevent degradation in accuracy of preference analysis while protecting privacy in collection of behavior information are provided.

A behavior information storage unit manages a user's behavior information associating it with a group ID, a group information update unit updates preference information of a group by the use of preference information based on past behavior information and the latest behavior information associated with the group ID, and a group list generation unit generates a group list, which is a set of group IDs for respective groups having similar preference information to that of a group identified by a group ID acquired from a user terminal, and sends it to the user terminal.

## Description

### Technical Field

The present invention relates to an information collection device, system, method and program.

### Background Art

There is known an information distribution system which selects information for distribution on the basis of behavior information representing a user's behavior and sends the selected information for distribution to a user terminal of the user (for example, refer to Patent Literature 1). The behavior information is, for example, position information representing a position of the user terminal, purchase information representing items purchased by the user, or the like.

A server device included in an information distribution system described in Patent Literature 1 includes a registrant file for registering users possessing user terminals, a purchase history file obtained by collecting purchase histories, a position information file (behavior pattern file) obtained by collecting the registrants' behavior using GPS (Global Positioning System) and an advertisement request file including information for distribution representing an advertisement. On the basis of the purchase history file, behavior pattern file and advertisement request file, the server extracts registrants to whom the information for distribution representing an advertisement is to be sent.

According to this information distribution system, it is possible to send information for distribution appropriately selected on the basis of the user's purchase history and behavior (that is, possible to provide a "personalized service") to a user terminal. According to the information distribution system described in Patent Literature 1, a detailed analysis of a user's preference information becomes possible by collecting the user's behavior information.

The preference information is a tendency of the user's behavior, and the analysis of preference information is, for example, in the case a record concerning items purchased by the user can be obtained as his/her behavior information, an analysis of a genre (fashion, interior, computer, game and so on) preferred by the user.

Further, accuracy of the preference information analysis is increased by continuously collecting behavior information over a long term. For example, a user may be analyzed to have an interest in "soccer" by collecting his/her behavior information for a week, and may further be analyzed to have an interest in a "specific soccer team" by collecting his/her behavior information for a month. As just described above, according to such an information distribution system or the like, by collecting a user's behavior information and analyzing his/her preference, improvement in service quality such as improvement of information for distribution becomes possible.

However, a user often feels displeasure at long-term accumulation of his/her behavior information. In order to solve this, a privacy protection mechanism to prevent the system from tracing a user"s behavior information is required.

### [Citation List]

### [Patent Literature]

[Patent Literature 1] Japanese Patent Application Laid-Open No. 2003-256713

### Summary of Invention

### [Technical Problem]

However, if the user shuts out the tracing of his/her behavior information, the system cannot use the user's behavior information accumulated previously, and accuracy of the preference analysis is thus degraded. Accordingly, the quality of the personalized service whose accuracy has been improved by the preference analysis is degraded.

That is, by the user's shutting out tracing of his/her behavior information, while the degree of user privacy can be increased, accuracy of the system's preference analysis is degraded as a result of the system's becoming unable to utilize accumulated behavior information.

As just described above, there is a problem in that improvement in degree of privacy protection in collecting behavior information and prevention of degradation in accuracy of the preference analysis cannot be compatible with each other.

In this respect, for the purpose of solving the problem, the present invention is aimed at providing an information collection device, system, method and program which prevent degradation in accuracy of preference analysis while protecting privacy.

### [Solution to Problem]

To achieve the above object, an information collection device according to an exemplary aspect of the invention includes a behavior information storage means for storing a group ID and pieces of behavior information acquired from a user terminal in association with each other, a group information storage means for storing the group ID and a first set of pieces of preference information in association with each other, a preference information storage means for storing a piece of behavior information and a second set of pieces of preference information in association with each other, a group information updating means for updating the first set of pieces of preference information associated with the group ID stored in the group information storage means, on the basis of the pieces of behavior information stored in the behavior information storage means and the second sets of pieces of preference information corresponding to respective the pieces of behavior information stored in the preference information storage means, and a group list generation/sending means for calculating a similarity between the first set of pieces of preference information corresponding to the group ID acquired from the user terminal and the first set of pieces of preference information corresponding to each of all group IDs stored in the group information storage means, acquiring a group ID associated with the first set of pieces of preference information having a similarity equal to or larger than a predetermined value from the group information storage means, and generating and sending a group list including the acquired group ID to the user terminal.

Further, the present invention provides an information collection program for causing a computer, the computer including a behavior information storage means for storing a group ID and pieces of behavior information acquired from a user terminal in association with each other, a group information storage means for storing the group ID and a first set of pieces of preference information in association with each other, and a preference information storage means for storing a piece of behavior information and a second set of pieces of preference information in association with each other, to execute a group information update step for updating the first set of pieces of preference information associated with the group ID stored in the group information storage means, on the basis of the pieces of behavior information stored in the behavior information storage means and the second sets of pieces of preference information corresponding to respective the pieces of behavior information stored in the preference information storage means, and a group list generation/sending step for calculating a similarity between the first set of pieces of preference information corresponding to the group ID acquired from the user terminal and the first set of pieces of preference information corresponding to each of all group IDs stored in the group information storage means, acquiring a group ID associated with the first set of pieces of preference information having a similarity equal to or larger than a predetermined value from the group information storage means, and generating and sending a group list including the acquired group ID to the user terminal.

Further, the present invention provides an information collection method including storing a group ID and pieces of behavior information acquired from a user terminal in association with each other, into a behavior information storage means, storing the group ID and a first set of pieces of preference information in association with each other, into a group information storage means, storing a piece of behavior information and a second set of pieces of preference information in association with each other, into a preference information storage means, updating the first set of pieces of preference information associated with the group ID stored in the group information storage means, on the basis of the pieces of behavior information stored in the behavior information storage means and the second sets of pieces of preference information corresponding to respective the pieces of behavior information stored in the preference information storage means, and calculating a similarity between the first set of pieces of preference information corresponding to the group ID acquired from the user terminal and the first set of pieces of preference information corresponding to each of all group IDs stored in the group information storage means, acquiring a group ID associated with the first set of pieces of preference information having a similarity equal to or larger than a predetermined value from the group information storage means, and generating and sending a group list including the acquired group ID to the user terminal.

### [Advantageous Effect of the Invention]

The present invention provides an information collection device, system, method and program which prevent degradation in accuracy of preference analysis while protecting privacy, in collecting behavior information.

### Brief Description of Drawings

Fig. 1 a block diagram showing an example of a configuration of a first exemplary embodiment
Fig. 2 a flowchart showing an example of overall operation of the first exemplary embodiment
Fig. 3 a flowchart showing an example of operation of a preference information update unit
Fig. 4 a flowchart showing an example of operation of a group list generation unit
Fig. 5 a flowchart showing an example of operation of a group selection unit
Fig. 6 a flowchart showing an example of operation of a group assessment unit
Fig. 7 a diagram showing an example of an ID storage unit
Fig. 8 a diagram showing an example of a preference information storage unit
Fig. 9 a diagram showing an example of a behavior information storage unit
Fig. 10 a diagram showing an example of a group information storage unit before update
Fig. 11 a diagram showing an example of a behavior information storage unit
Fig. 12 a diagram showing an example of information used during a process of preference information analysis by the preference information analysis unit
Fig. 13 a diagram showing an example of another type of information used during the process of preference information analysis by the preference information analysis unit
Fig. 14 a diagram showing an example of still another type of information used during the process of preference information analysis by the preference information analysis unit
Fig. 15 a diagram showing an example of a group information storage unit after update
Fig. 16 a diagram showing an example of information used during a process of group list generation by the group list generation unit Fig. 17 a diagram showing an example of a group list
Fig. 18 a diagram showing an example of information used during a process of group assessment by the group assessment unit.
Fig. 19 a diagram showing an example of another type of information used during the process of group assessment by the group assessment unit.
Fig. 20 a diagram showing an example of a result of group assessment
Fig. 21 a diagram showing an example of an ID storage unit
Fig. 22 a block diagram showing an example of a configuration of a second exemplary embodiment

### Description of Embodiments

Hereinafter, exemplary embodiments of the present invention will be described using drawings. With respect to all drawings, an identical sign is given to constituent elements which are similar to each other, and their descriptions will be properly omitted.

Here, each of units constituting a device or the like in each exemplary embodiment is configured with hardware such as a logic circuit. Further, each of the units may be composed of a control unit, a memory, a program loaded on the memory, a storage unit for storing the program such as a hard disk, an interface for network connection and the like of a computer, and may thus be realized by any combination of hardware and software. Unless otherwise noted, there is no restriction on a method and a device for realizing them.

Further, the control unit is composed of a CPU (Central Processing Unit) or the like, controls the whole of a device or the like by causing an OS (Operating system) to operate, reads out a program and data from a recording medium loaded, for example, on a drive device into a memory, and executes various kinds of processes in accordance with the read-out program and data. The recording medium is, for example, an optical disc, a flexible disc, a magneto-optical disc, an external hard disk, a semiconductor memory or the like, into which a computer records a computer program in a computer-readable form. The computer program may also be downloaded from an external computer not illustrated in the drawing which is connected to a communication network.

### (First exemplary embodiment)

### [Configuration]

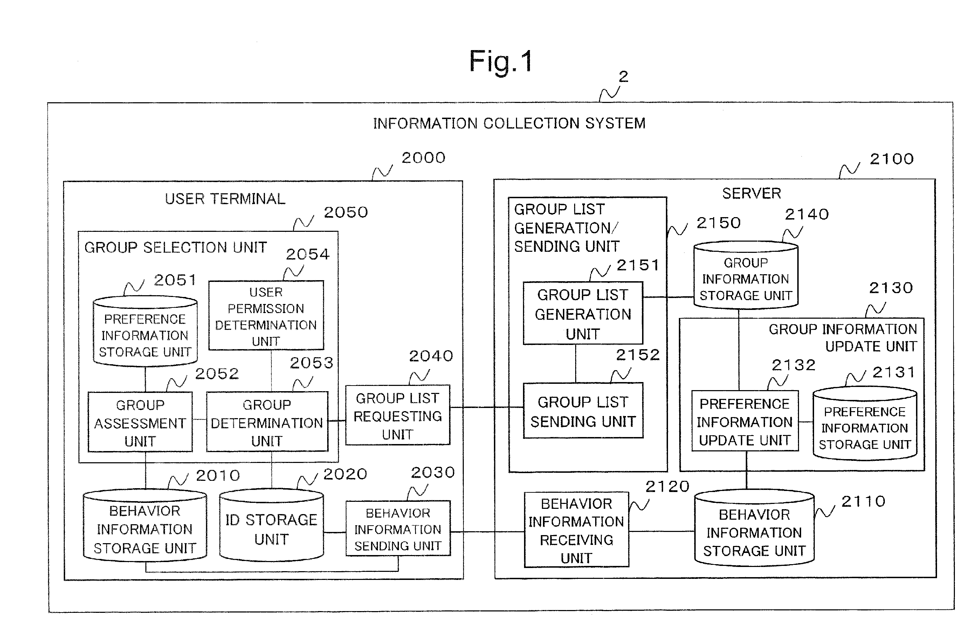

An information collection system 2 shown in Fig. 1 consists of a server 2100 and a plurality of user terminals (one of which is illustrated as a user terminal 2000).

The server 2100 of the present exemplary embodiment includes a behavior information receiving unit 2120, a behavior information storage unit 2110, a group information storage unit 2140, a group information update unit 2130 and a group list generation/sending unit 2150.

The behavior information receiving unit 2120 receives a group ID and behavior information sent from a user terminal 2000 and stores them into the behavior information storage unit 2110.

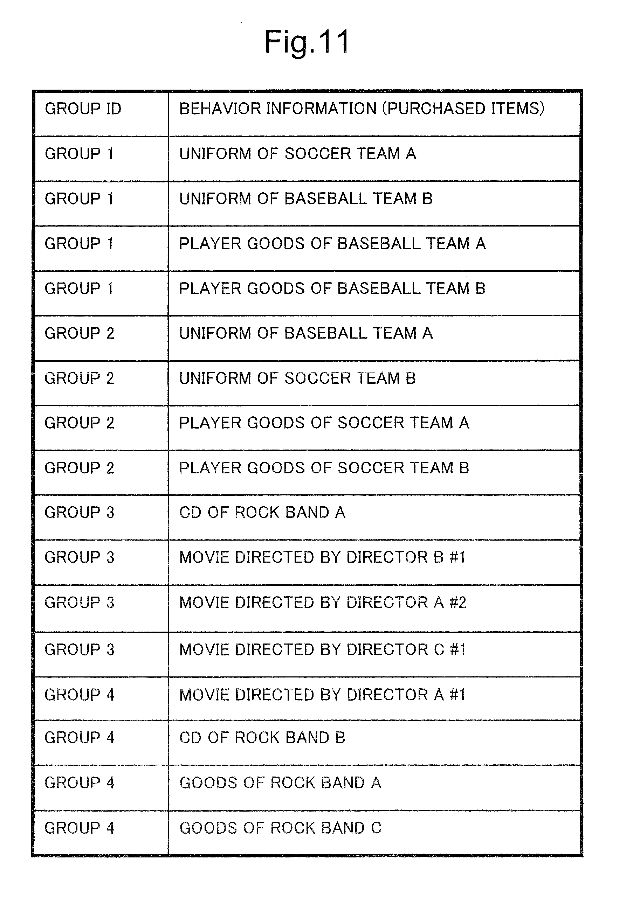

The behavior information storage unit 2110 stores the group ID and behavior information acquired from the user terminal 2000 in association with each other (refer to Fig. 11).

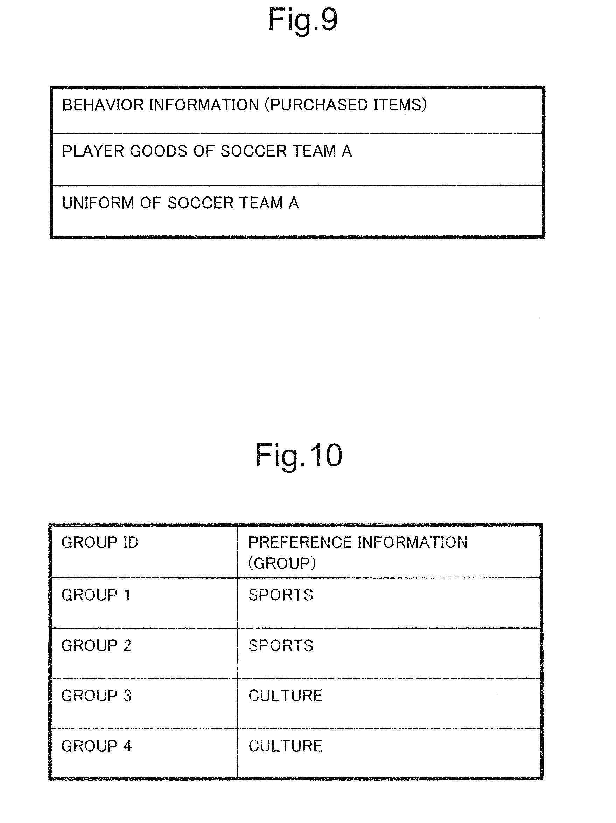

The group information storage unit 2140 stores a group ID and preference information (preference information for group) in association with each other (refer to Fig. 10). The information stored in the group information storage unit 2140 is updated as described later.

The group information update unit 2130 includes a preference information storage unit 2131 and a preference information update unit 2132.

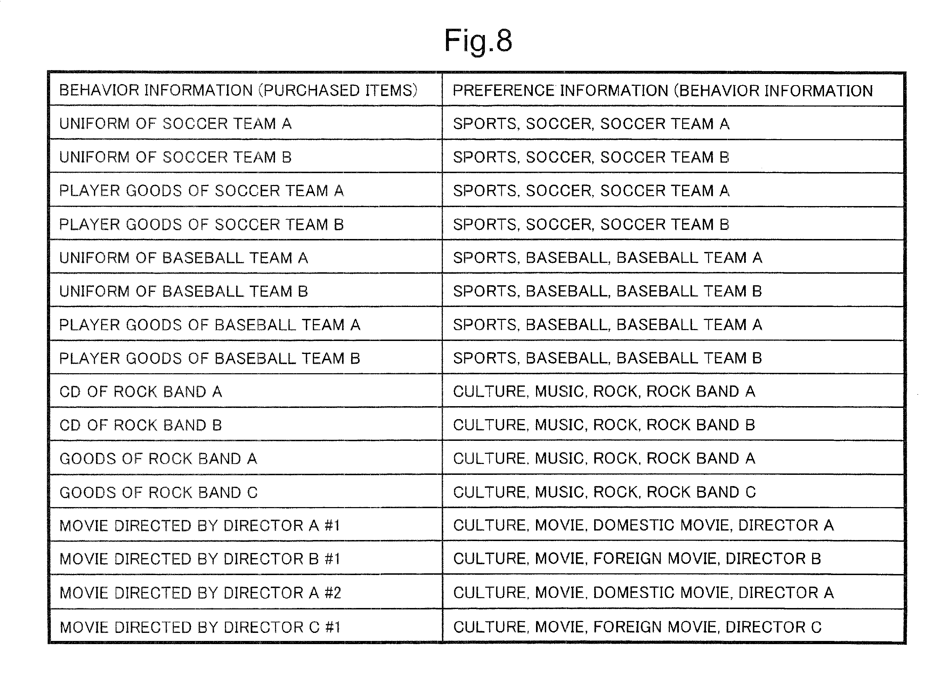

The preference information storage unit 2131 is set in advance, for example, by an administrator or the like, and stores behavior information and preference information (preference information for behavior information) in association with each other (refer to Fig. 8).

On the basis of the information stored in the behavior information storage unit 2110 (refer to Fig. 11) and the information stored in the preference information storage unit 2131 (refer to Fig. 8), the preference information update unit 2132 updates the group information storage unit 2140. The update operation of the preference information update unit 2132 will be described later.

The group information update unit 2130 updates preference information using behavior information acquired from the user terminal 2000. Details of the operation will be described later.

The group list generation/sending unit 2150 includes a group list generation unit 2151 and a group list sending unit 2152.

The group list generation unit 2151 extracts, from the group information storage unit 2140, a set of pieces of preference information corresponding to a group ID acquired from the user terminal 2000, and calculates a similarity between the extracted set of pieces of preference information and a set of pieces of preference information corresponding to each of the other group IDs stored in the group information storage unit 2140. Then, by acquiring group IDs corresponding to sets of pieces of preference information having a high similarity from the group information storage unit 2140, the group list generation unit 2151 generates a group list. The group list may include preference information corresponding to each of the group IDs.

The group list sending unit 2152 sends the group list to the user terminal 2000.

The user terminal 2000 includes a behavior information storage unit 2010, an ID storage unit 2020, a behavior information sending unit 2030, a group list requesting unit 2040 and a group selection unit 2050.

The behavior information storage unit 2010 stores behavior information of the user (refer to Fig. 9). The behavior information is, for example, properly acquired by a behavior information collection unit not illustrated in the drawing and stored into the behavior information storage unit 2010. Alternatively, the user may input the behavior information directly to the user terminal 2000 via an input unit or the like not illustrated in the drawing.

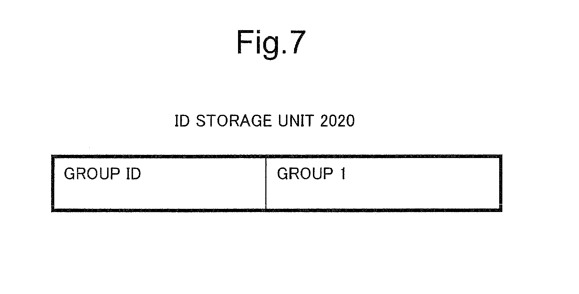

The ID storage unit 2020 stores a group ID for identification of a group the user belongs to (refer to Fig. 7). Although the number of group IDs stored in the ID storage unit 1020 may be other than one for each user, the following description will be given of an example in which the ID storage unit 1020 stores only one group ID.

The behavior information sending unit 2030 sends the group ID and behavior information to the server 2100.

The group list requesting unit 2040 sends a request to the server 2100 for a group list and receives a group list sent back from the server 2100.

The group selection unit 2050 includes a preference information storage unit 2051, a group assessment unit 2052, a group determination unit 2053 and a user permission determination unit 2054.

The preference information storage unit 2051 is similar to the preference information storage unit 2131 included in the server 2100 (refer to Fig. 8), and stores preference information acquired, for example, from the server 2100.

On the basis of the preference information stored in the preference information storage unit 2051, the group assessment unit 2052 assigns an assessment value to each of group IDs included in the group list acquired from the server 2100. The group determination unit 2053 determines a group ID with respect to the largest assessment value as the group ID to be held by the user terminal 2000. Details of the operation will be described later.

On the basis of the assessment values for the respective group IDs, the group determination unit 2053 determines a group ID with respect to the largest assessment value in the group list, and indicates it to be held by the user terminal 2000.

The user permission determination unit 2054 asks the user for his/her permission for his/her belonging to a group identified by the group ID determined by the group determination unit 2053, thus making the user finally determine a group ID to be held by the user terminal 2000.

With such a configuration, by letting the user to select a group ID from among group IDs associated with preference information reflecting past and the latest behavior information, the server 2100 can make the user hold a group ID representing the user's preference information with higher accuracy, although it cannot trace behavior information for a long term. Accordingly, accuracy of analysis of the user's behavior information can be improved.

Further, resulting from that a group is selected by the user terminal 2000, transition of groups the user belongs to is never noticed explicitly by the server 2100. Accordingly, the system is excellent in privacy protection.

### [Overall operation]

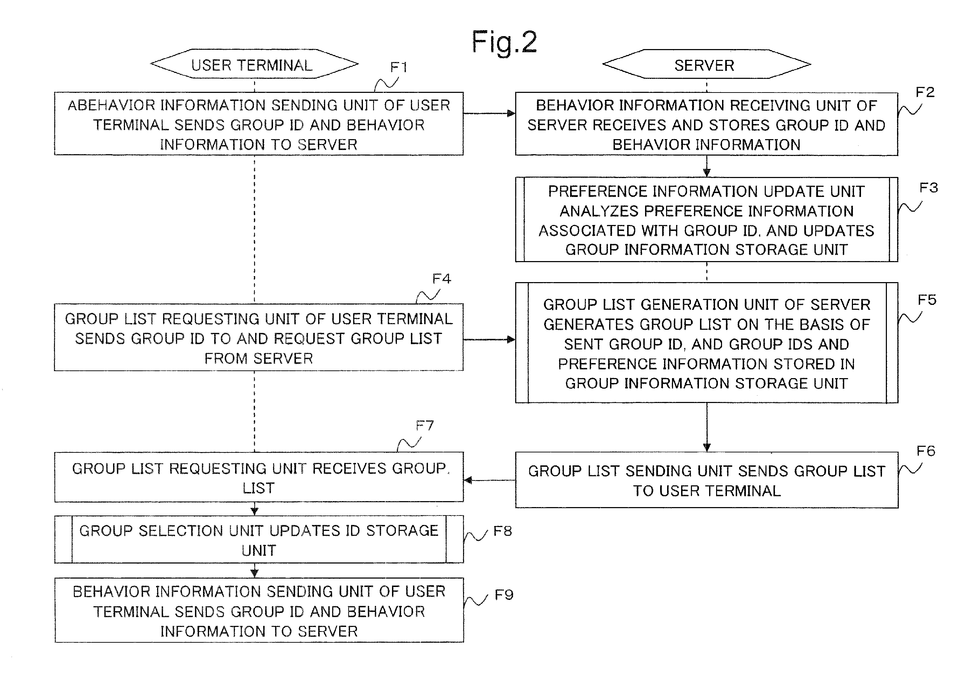

Next, overall operation of the present exemplary embodiment will be described in detail with reference to flow charts in Figs. 1 and 2.

First, the behavior information sending unit 2030 of the user terminal 2000 sends a group ID and behavior information to the server 2100 (step F1).

Then, the behavior information receiving unit 2120 of the server 2100 receives the group ID and behavior information and stores them into the behavior information storage unit 2110 (step F2).

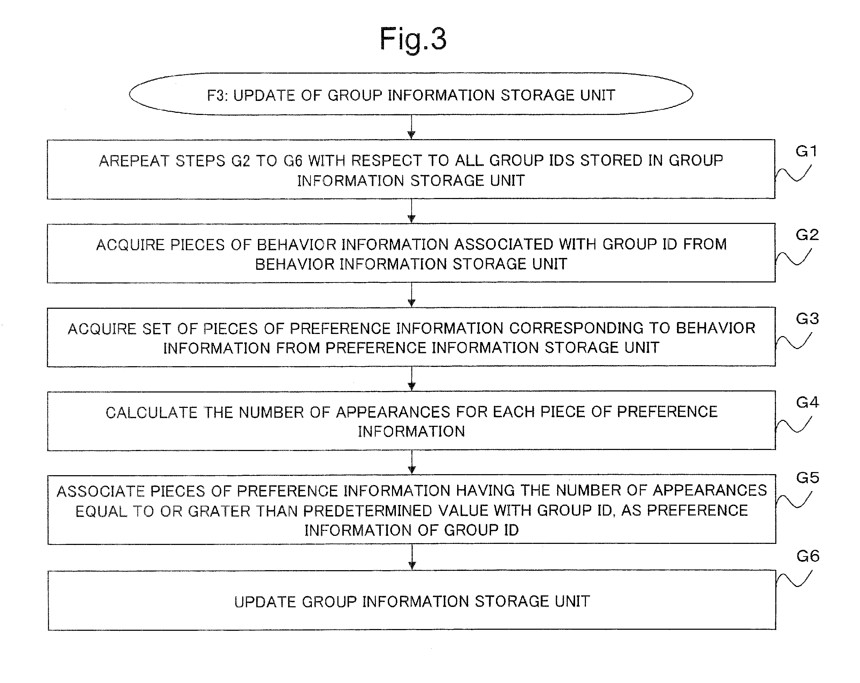

Next, using behavior information stored in the behavior information storage unit 2110 (refer to Fig. 11) and preference information associated with the group ID stored in the group information storage unit 2140 (refer to Fig. 10), the preference information update unit 2132 analyzes preference information associated with the group ID and updates the group information storage unit 2140 (Step F3). The update of preference information corresponding to the group ID will be described later using Fig. 3.

Next, the group list requesting unit 2040 sends a group ID to the server 2100, thus requesting a group list (step F4).

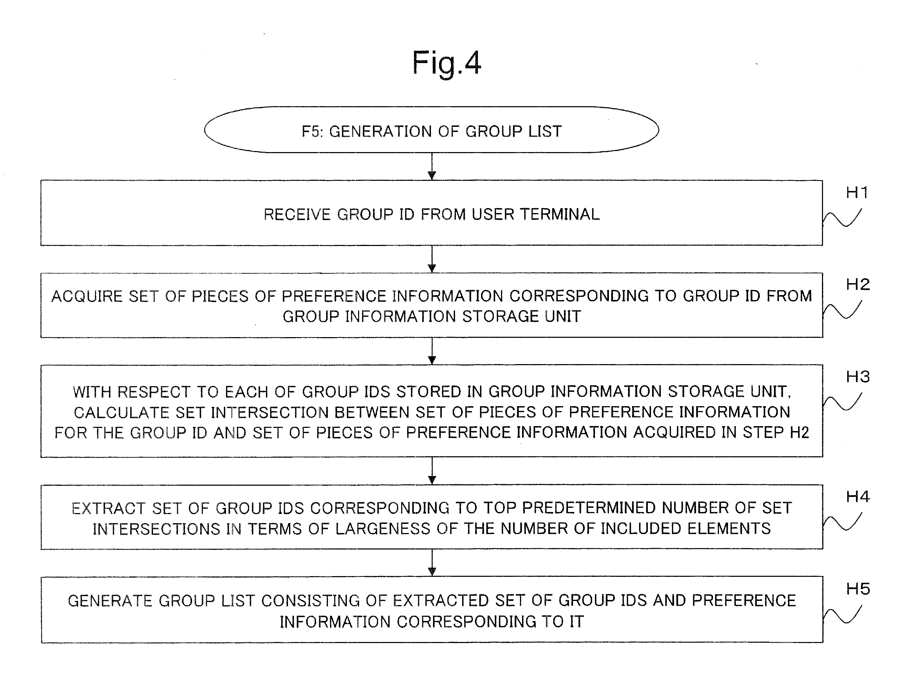

Then, the group list generation unit 2151 generates a group list, on the basis of the group ID received from the user terminal 2000 and group IDs, preference information stored in the group information storage unit 2140 (step F5). The group list generation will be described later using Fig. 4.

Next, the group list sending unit 2152 sends the group list to the user terminal 2000 (step F6).

Then, the group list requesting unit 2040 receives the group list (step F7).

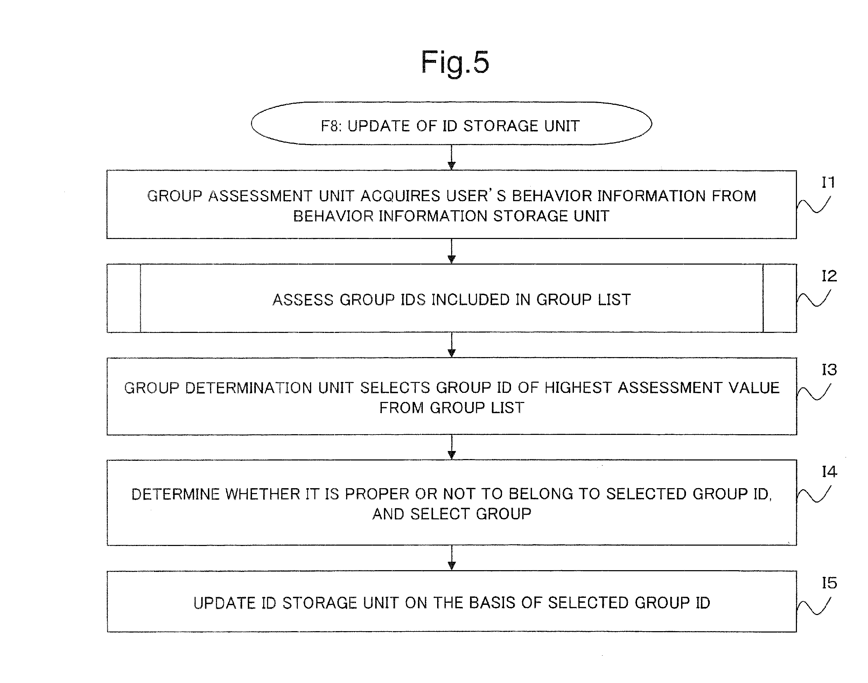

Next, the group selection unit 2050 updates the ID storage unit 2020. Here, the group assessment unit 2052 of the group selection unit 2050 assesses group IDs included in the group list using behavior information stored in the behavior information storage unit 2010. The group determination unit 2053 selects a group ID on the basis of the assessment. The user permission determination unit 2054 confirms the user's permission and updates the ID storage unit 2020 using the selected group ID (step F8). The update of the ID storage unit will be described later using Fig. 5.

Finally, the behavior information sending unit 2030 of the user terminal 2000 sends the group ID and behavior information to the server 2100 (step F9).

### [Operation of the preference information update unit 2130]

Next, using a flow chart in Fig. 3, detail description will be given of operation of updating preference information associated with group IDs performed by the preference information update unit 2130 in the step F3.

The preference information update unit 2130 repeats steps G2 to G6 with respect to all group IDs stored in the group information storage unit 2140 (refer to Fig. 10) (step G1).

The preference information update unit 2130 acquires pieces of behavior information associated with a group ID Gid from the behavior information storage unit 2110 (refer to Fig. 11) (step G2). That is, the preference information update unit 2130 acquires a set Sf (Gid) = {pieces of behavior information}.

Next, the preference information update unit 2130 acquires, from the preference information storage unit 2131 (refer to Fig. 8), a set of pieces of preference information corresponding to each piece in the set of pieces of behavior information acquired in the step G2 (step G3). The preference information update unit 2130 transforms each of the pieces of behavior information into the acquired set of pieces of preference information, thus transforming the set Sf (Gid) into a set Sf' (Gid) = {pieces of preference information}.

Then, with respect to the set Sf' (Gid), the preference information update unit 2130 calculates the number of appearances of each piece of preference information included in the set (step G4).

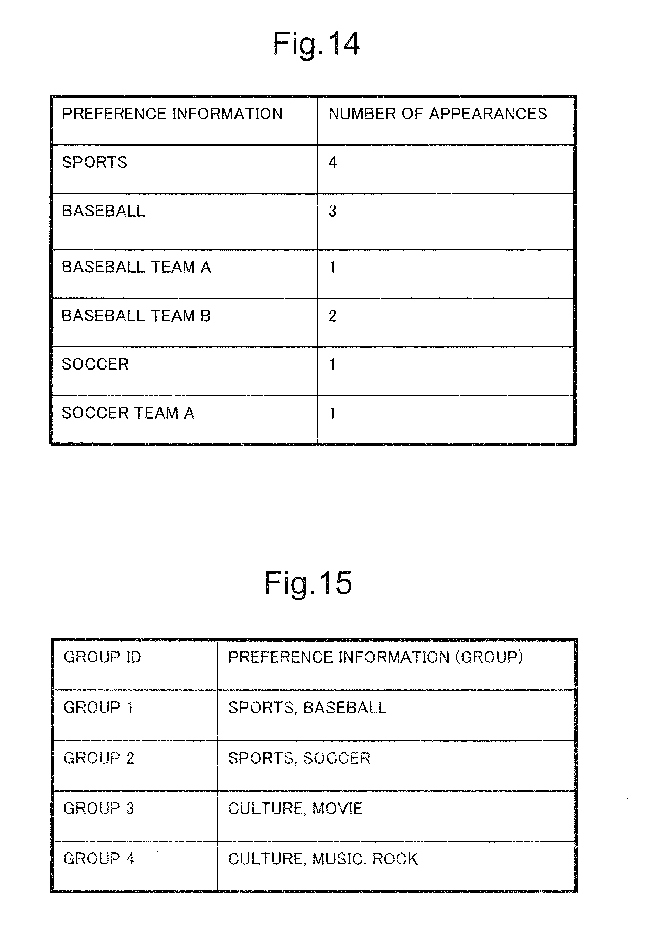

Next, the preference information update unit 2130 extracts, for example, pieces of preference information having the number of appearances equal to or larger than such as a predetermined number or a predetermined percentage of the number of users of the group, and sets them as a set of pieces of preference information of the group (associates them with the group ID as a set of pieces of preference information for the group ID) (refer to Figs. 14 and 15) (step G5).

Finally, the preference information update unit 2130 updates the group information storage unit 2140 using the new set of pieces of preference information (refer to Fig. 15) (step G6).

### [Operation of the group list generation unit 2151]

Next, using a flow chart in Fig. 4, detail description will be given of operation of generating a group list performed by the group list generation unit 2151 in the step F5.

First, the group list generation unit 2151 receives a group ID Gid from the user terminal 2000 (step H1).

Next, the group list generation unit 2151 acquires a set of pieces of preference information Sf(Gid) corresponding to the group ID from the group information storage unit 2140 (refer to Fig. 15) (step H2).

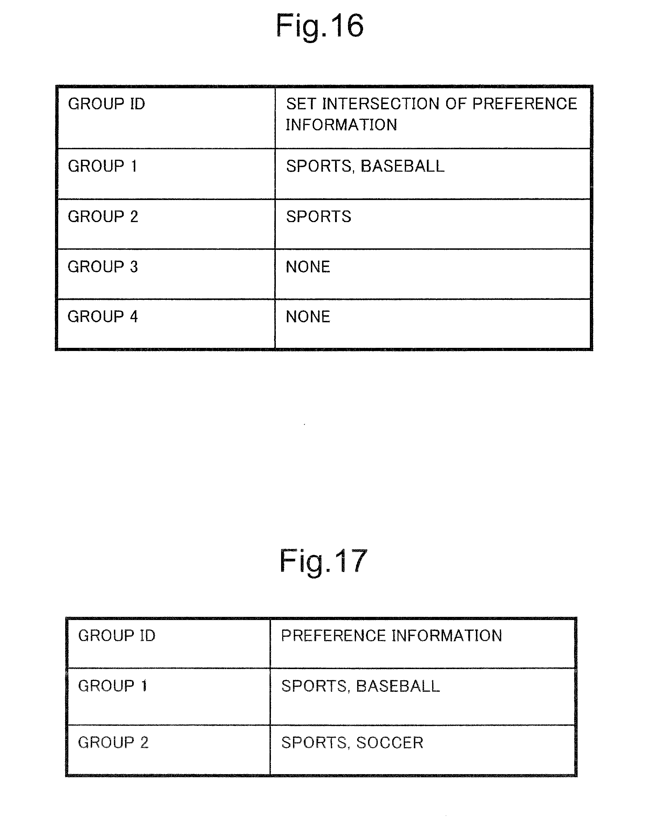

Then, the group list generation unit 2151 calculates a set intersection between the set of pieces of preference information Sf(Gid) and a set of pieces of preference information for each of all group IDs stored in the group information storage unit 2140 (refer to Fig. 16) (step H3).

Next, among the calculated set intersections, the group list generation unit 2151 extracts group IDs corresponding to top predetermined number of set intersections in terms of largeness of the number of included elements (step H4).

Finally, the group list generation unit 2151 generates a group list consisting of the extracted group IDs and sets of pieces of preference information corresponding to the respective group IDs (refer to Fig. 17) (step H5).

### [Operation of the group selection unit 2050]

Next, using a flow chart in Fig. 5, detail description will be given of operation of updating the ID storage unit 2020 performed by the group selection unit 2050 in the step F8.

First, the group assessment unit 2052 of the group selection unit 2050 acquires the user's behavior information from the behavior information storage unit 2010 (step I1).

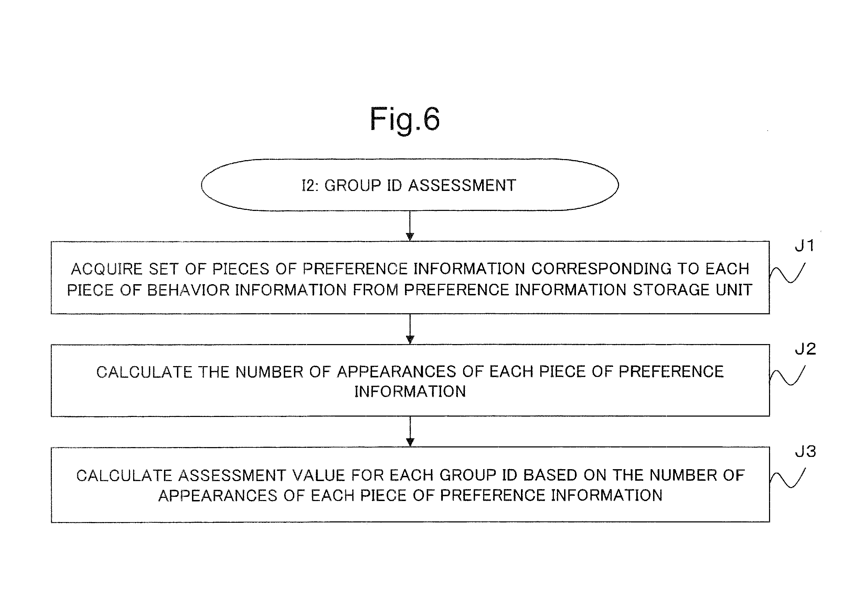

Then, the group assessment unit 2052 assesses group IDs included in the group list, using the user's behavior information and preference information included in the group list (step I2). The group ID assessment will be described later using Fig. 6.

Next, the group determination unit 2053 selects a group ID of the highest assessment value from the group list (step I3).

Next, the user enters, via the user permission determination unit 2054, a decision on whether he/she agrees to belong to the group ID selected by the group determination unit 2053 (on whether or not to permit the user terminal 2000 to hold the group ID). If obtaining the user's permission, the group determination unit 2053 finally selects the selected group ID and, if not, it selects the current group ID (step I4).

Finally, by replacing the current group ID with the selected group ID, the group determination unit 2053 updates the ID storage unit 2020 (step 15).

### [Operation of the group assessment unit 2052]

Next, using a flow chart in Fig. 6, detail description will be given of operation of assessing group IDs included in the group list performed by the group assessment unit 2052 in the step I2 in Fig. 5.

First, the group assessment unit 2052 acquires preference information corresponding to each piece of behavior information acquired in the step I1 in Fig. 5, from the preference information storage unit 2051 (step J1).

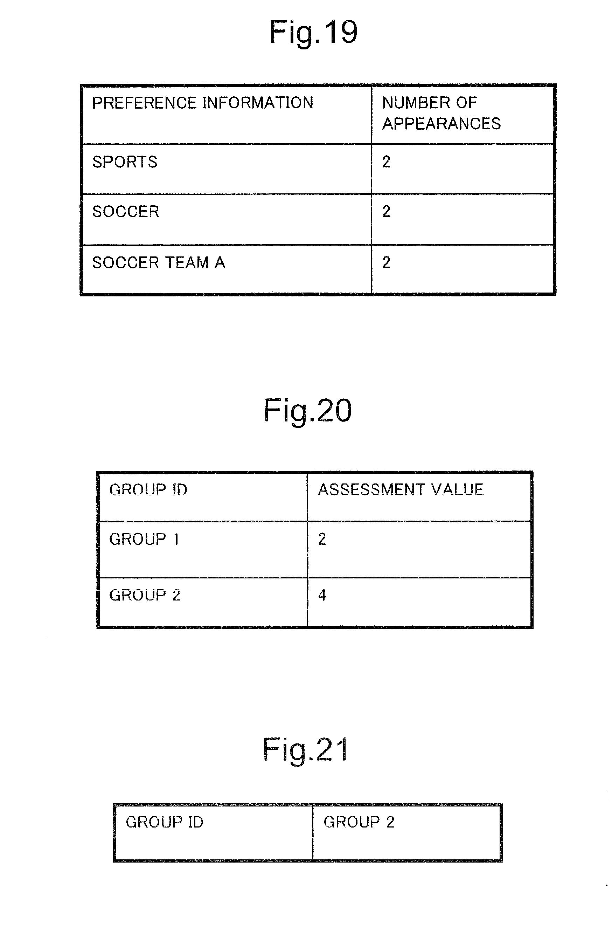

Then, with respect to the acquired sets of pieces of preference information, the group assessment unit 2052 calculates the number of appearances of each piece of preference information, and thus transforms the sets into a set consisting of the pieces of preference information and the numbers of appearances corresponding to the respective pieces of preference information, {(a piece of preference information, the number of appearance)}, (refer to Fig. 19) (step J2).

Finally, referring to the numbers of appearances of preference information obtained in the step J2, the group assessment unit 2052 calculates, with respect to each of the group IDs included in the group list, a sum of the numbers of appearances of respective pieces of preference information associated with the group ID, and sets the calculated value to be an assessment value of the group ID (step J3).

### [Specific example]

Next, operation of the present exemplary embodiment will be described using a specific example.

Here, description will be given of an example where analysis of a user's preference is performed on the basis of item purchase information regarded as his/her behavior information.

First, it is assumed that, in the user terminal 2000, information such as shown in Fig. 7 is stored in the ID storage unit 2020, information such as shown in Fig. 9 is stored in the behavior information storage unit 2010, and information such as shown in Fig. 8 is stored in the preference information storage unit 2051.

It is further assumed that, in the server 2100, information such as shown in Fig. 10 is stored in the group information storage unit 2140, and information such as shown in Fig. 8 is stored in the preference information storage unit 2131.

As a first step, the behavior information sending unit 2030 of the user terminal 2000 sends a group ID and behavior information (step F1 in Fig. 2). In this case, ("Group 1", uniform of soccer team A) is sent as the latest behavior information.

Then, the behavior information receiving unit 2120 of the server 2100 receives the information. A result of the reception is shown in Fig. 11 (step F2).

Next, using preference information associated with the group ID and collected behavior information, the preference information update unit 2132 updates the preference information associated with the group ID, thus updating the group information storage unit 2140 (step F3).

The update of the group information storage unit 2140 will be described using Fig. 3.

First, the preference information update unit 2132 repeats steps G2 to G6 with respect to all group IDs stored in the group information storage unit 2140 (step G1). In the present example, a case of group ID = "group 1" will be described.

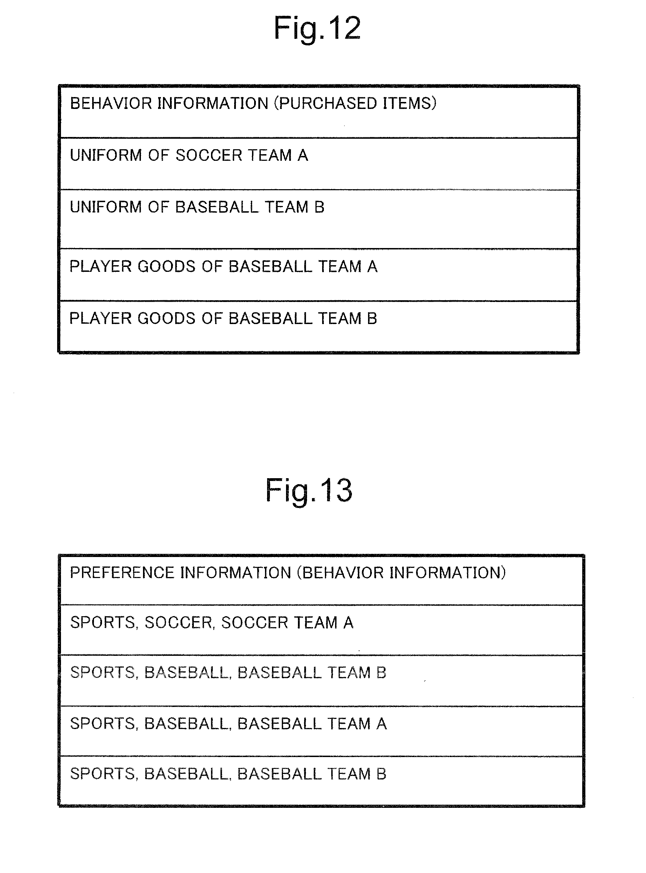

The preference information update unit 2132 acquires pieces of behavior information associated with the group ID = "group 1" from the behavior information storage unit 2110 (refer to Fig. 11) (step G2). The acquired data is shown in Fig. 12.

Next, the preference information update unit 2132 acquires sets of preference information corresponding to respective pieces of behavior information shown in Fig. 12 from the preference information storage unit 2131 (refer to Fig. 8). The preference information update unit 2132 transforms each of the pieces of behavior information in Fig. 12 into a corresponding set of pieces of preference information, thus obtaining sets of pieces of preference information (step G3). The obtained sets of preference information are shown in Fig. 13.

Next, the preference information update unit 2132 calculates the number of appearances of each piece of preference information (step G4). A result of the calculation is shown in Fig. 14.

Next, the preference information update unit 2132 associates top two pieces of preference information in terms of the number of appearances with the group ID, as a set of pieces of preference information for the group ID (step G5). In the present example, thus determined set of pieces of preference information for the "group 1" is {"sports", "baseball"}. Here, the preference information update unit 2132 may associate pieces of preference information having the number of appearances larger than a predetermined value with the group ID, and a way of associating preference information with a group ID may be changed appropriately.

Finally, using the group ID and the determined set of pieces of preference information, the preference information update unit 2132 updates the group information storage unit 2140 (step G6). A result of the update is shown in Fig. 15.

Next, the group list requesting unit 2040 of the user terminal 2000 sends the group ID = "group 1 "to the server 2100, and thus requests a group list (step F4).

Then, the group list generation unit 2151 generates a group list (step F5).

The group list generation will be described using Fig. 4.

First, the group list generation unit 2151 receives the group ID = "group 1" sent from the user terminal 2000 (step H1).

Then, the group list generation unit 2151 acquires a set of pieces of preference information Sf(Gid) corresponding to the group ID = "group 1" from the group information storage unit 2140 (refer to Fig. 15) (step H2). In the present case, it results in Sf("group 1") = {"sports", "baseball"} .

Next, the group list generation unit 2151 calculates a set intersection between the set of pieces of preference information Sf(Gid) and a set of pieces of preference information corresponding to each of all group IDs stored in the group information storage unit 2140 (step H3). Resulting set intersections are shown in Fig. 16. The result in Fig. 16 is obtained because of that: a set intersection between the set of pieces of preference information corresponding to the group 1 stored in the group information storage unit 2140 and itself is {"sports", "baseball"}; a set intersection between the set of pieces of preference information corresponding to the group 1 and that corresponding to the group 2 is {"sports"}; and a set intersection between the set of pieces of preference information corresponding to the group I and that corresponding to the groups 3 or 4 is an empty set. When the number of elements included in a set intersection between two sets of preference information is larger, it indicates that there is higher similarity between the sets of preference information. This is also equivalent to measuring a similarity between group IDs by a degree of coincidence between sets of pieces of preference information associated with the respective group IDs.

Next, the group list generation unit 2151 extracts top predetermined number of group IDs (assumed to be two, in the present example) in terms of largeness of the number of elements included in the corresponding set of pieces of preference information (step H4). In the present example, the "group 1" and "group 2" are extracted as shown in Fig. 16. The group IDs extracted here are those having high similarity to the group 1. That is, in the steps H3 and H4, by calculating a similarity between the set of pieces of preference information associated with the group 1 and each of the other sets of pieces of preference information, the group list generation unit 2151 generates a group list consisting of group IDs having a high similarity (giving a large number of elements included in a set intersection between sets of pieces of preference information).

Finally, the group list generation unit 2151 generates a group list wherein the extracted group IDs and sets of pieces of preference information corresponding to the respective group IDs are collected up (step H5). The generated group list is shown in Fig. 17.

Next, the group list sending unit 2152 sends the group list to the user terminal 2000 (step F6).

Then, the group list requesting unit 2040 receives the group list (step F7).

Next, the group selection unit 2050 updates the ID storage unit 2020 (step F8).

The update of the ID storage unit 2020 will be described using Fig. 5.

First, the group assessment unit 2052 acquires the user's behavior information from the behavior information storage unit 2010 (step I1). The acquired information is shown in Fig. 9.

Next, the group assessment unit 2052 assesses group IDs included in the group list using the user's behavior information and preference information included in the group list (step I2).

The assessment of the groups will be described using Fig. 6.

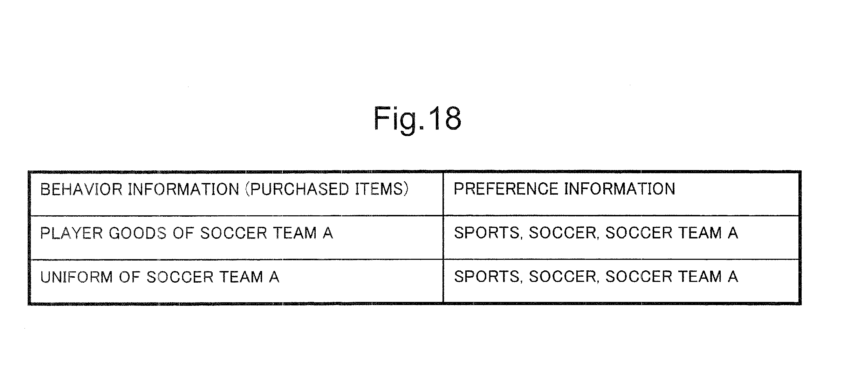

First, the group assessment unit 2052 acquires a set of pieces of preference information corresponding to each of the acquired pieces of behavior information, from the preference information storage unit 2051 (step J1). A result of the acquisition is shown in Fig. 18.

Then, the group assessment unit 2052 calculates the number of appearances (a point) of each of the acquired pieces of preference information (step J2). A result is shown in Fig. 19.

Finally, with respect to each group ID included in the group list, the group assessment unit 2052 calculates a sum of the points for all pieces of preference information associated with the group ID, and sets the calculated value to be an assessment value of the group ID (step J3). A result of the assessment is shown in Fig. 20. The result in Fig. 20 is obtained because of that: the points for the pieces of preference information {"sports"} and {"baseball" included in the set of pieces of preference information {"sports", "baseball"} corresponding to the group 1 are 2 and 0, respectively, and the assessment value of the group 1 is thus calculated as 2+0 = 2; and the points for the pieces of preference information {"sports"} and {"soccer"} included in the set of pieces of preference information {"sports", "soccer"} corresponding to the group 2 are both 2, and the assessment value of the group 2 is thus calculated as 2+2 = 4;

Subsequently, the group determination unit 2053 selects a group ID with respect to the largest assessment value from the group list (step I2). As a result, the group 2 with the assessment value of "4" is selected.

Next, the user determines, via the user permission determination unit 2054, whether he/she agrees to belong to the selected group ID (whether or not to permit the user terminal 2000 to hold the group ID) on the basis of preference information and the like (step I3). If the user gives permission, the "group 2" is set to be a finally selected group ID. If the user does not give permission, the originally set "group 1" is set to be a finally selected group ID again.

Finally, by replacing the original group ID with the selected group ID, the group determination unit 2053 updates the ID storage unit 2020 (step I4). The updated ID storage unit 2020 in the case the user's permission has been obtained in the previous step is shown in Fig. 21.

Here, the user may directly select a group ID from the group list acquired from the server 2100. In this case, there is no necessity of the group assessment unit 2052, the group determination unit 2053 and the like.

As a final step, by the behavior information sending unit 2030 of the user terminal 2000 sending the selected group ID to the server 2100. the group ID is updated (Step F9).

In the present exemplary embodiment, the configuration is made such that: the behavior information storage unit 2110 manages the user's behavior information associating it with a group ID; the group information update unit 2130 updates preference information of a group by the use of preference information based on past behavior information and the latest behavior information associated with the group ID; the group list generation unit 2151 generates a group list which is a set of group IDs for groups having similar preference information to that of a group identified by a group ID acquired from the user terminal 2000; and from the group list, the group selection unit 2050 selects a group ID more suitable to its own preference by the use of the user's behavior information.

Accordingly, although the server 2100 cannot trace the user's behavior information for a long term, it can make the user belong to a group ID representing his/her preference information with higher accuracy by letting the user to select a group ID suitable for himself/herself from among group IDs associated with preference information reflecting past and the latest behavior information. As a result, accuracy of an analysis of the user's behavior information can be improved.

Further, since the group selection is performed at the user terminal side, transition of groups about the user is never noticed explicitly by the server side. Therefore, the system is excellent in privacy protection.

Further, in the present exemplary embodiment, because the configuration is also made such that the user can determine whether or not to belong to a selected group with the assistance of the user permission determination unit 2054 of the group selection unit 2050, the user can control preference information to be associated with himself/herself. As a result, it is possible to solve a problem of privacy invasion caused by getting the accuracy of preference information excessively improved.

### (Second exemplary embodiment)

Next, a second exemplary embodiment of the present invention will be described using a drawing.

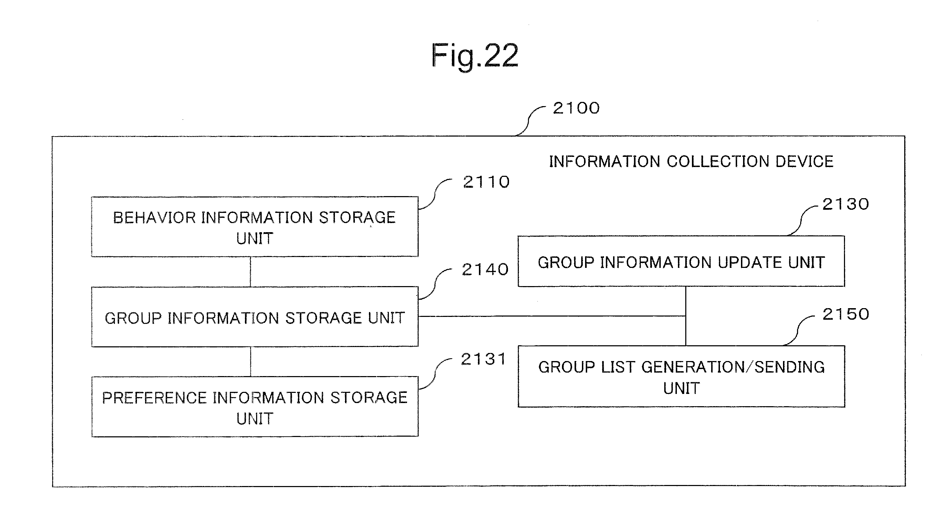

Fig. 22 is a diagram showing an example of a configuration of an information collection device 2100 of the present exemplary embodiment. The information collection device 2100 includes a behavior information storage unit 2110, a group information storage unlit 2140, a preference information storage unit 2131, a group information update unit 2130 and a group list generation/sending unit 2150. Because the configurations and operations of these units are the same as those in the first exemplary embodiment, their detail descriptions will be omitted.

The behavior information storage unit 21 10 stores a group ID and pieces of behavior information acquired from the user terminal 2000, in association with each other.

The group information storage unit 2130 stores a group ID and a first set of pieces of preference information in association with each other.

The preference information storage unit 2131 stores a piece of behavior information and a second set of pieces of preference information in association with each other.

The group information update unit 2130 updates the group information storage unit 2140 by extracting pieces of behavior information corresponding to an identical group ID from the behavior information storage unit 2110 and, referring to the preference information storage unit 2131, transforming the pieces of behavior information into second sets of pieces of preference information corresponding to the respective pieces of behavior information, and associating pieces of preference information having the number of appearances equal to or larger than a predetermined number, among the transformed second sets of pieces of preference information, with the above-mentioned group ID, as the first set of pieces of preference information.

The group list generation/sending unit 2150 acquires, from the group information storage unit 2140, the first set of pieces of preference information corresponding to a group ID identical with the group ID acquired from the user terminal 2000. The group list generation/sending unlit 2150 calculates a similarity with the acquired first sets of pieces of preference information and acquires all group IDs giving a high similarity from the group information storage unit 2140. The group list generation/sending unit 2150 generates a group list including the acquired group IDs and sends it to the user terminal 2000.

According to the present exemplary embodiment, the information collection device 2100 can let the user to hold an appropriate group ID by properly updating preference information associated with a group ID on the basis of behavior information and a group ID acquired from the user terminal 2000 and preference information associated with them.

As a result, while the information collection device 2100 cannot trace behavior information of a specific user for a long term, it can grasp the user's behavior information by managing a group ID which reflects the user's behavioral characteristics. Accordingly, an information collection device, system, method and program which can prevent degradation in accuracy of preference analysis while protecting privacy in collection of behavior information are provided.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2011-272448, filed on December 13, 2011, the disclosure of which is incorporated herein in its entirety by reference.

### Reference Signs List

- 2000: user terminal
- 2010: behavior information storage unit
- 2020: ID storage unit
- 2030: behavior information sending unit
- 2040: group list requesting unit
- 2050: group selection unit
- 2051: preference information storage unit
- 2052: group assessment unit
- 2053: group determination unit
- 2054: user permission determination unit
- 2100: server
- 2110: behavior information storage unit
- 2120: behavior information receiving unit
- 2130: group information update unit
- 2131: preference information storage unit
- 2132: preference information update unit
- 2150: group list generation/sending unit
- 2151: group list generation unit
- 2152: group list sending unit

## Claims

1. An information collection device comprising:
a behavior information storage means for storing a group ID and pieces of behavior information acquired from a user terminal in association with each other;
a group information storage means for storing said group ID and a first set of pieces of preference information in association with each other;
a preference information storage means for storing a piece of behavior information and a second set of pieces of preference information in association with each other;
a group information updating means for updating said first set of pieces of preference information associated with said group ID stored in said group information storage means, on the basis of said pieces of behavior information stored in said behavior information storage means and said second sets of pieces of preference information corresponding to respective said pieces of behavior information stored in said preference information storage means; and
a group list generation/sending means for calculating a similarity between said first set of pieces of preference information corresponding to said group ID acquired from said user terminal and said first set of pieces of preference information corresponding to each of all group IDs stored in said group information storage means, acquiring a group ID associated with said first set of pieces of preference information having a similarity equal to or larger than a predetermined value from said group information storage means, and generating and sending a group list including said acquired group ID to said user terminal.

2. The information collection device according to claim 1, wherein
said group information update means updates said first set of pieces of preference information by transforming said pieces of behavior information corresponding to said group ID stored in said behavior information storage means into second sets of pieces of preference information corresponding to respective said pieces of behavior information referring to said preference information storage means, and by associating pieces of preference information having the number of appearances equal to or larger than a predetermined number, among said transformed second sets of pieces of preference information, with said group ID.

3. The information collection device according to claims 1 or 2, wherein
said group list generation/sending means generates said group list by extracting said first set of pieces of preference information associated with said group ID included in said group list from said group information storage means, and by associating said extracted first set of pieces of preference information with said group ID.

4. An information collection system including:
said user terminal comprising
a behavior information sending means for sending a group ID and a piece of behavior information,
a group list requesting means for requesting said group list, and
a group selection means for selecting a group ID from acquired said group list; and
said information collection device according to claim 3.

5. The information collection system according to claim 4, wherein
said user terminal further comprises
a behavior information storage means for storing pieces of behavior information of a user, and
a preference information storage means for storing a predetermined piece of behavior information and a predetermined set of pieces of preference information in association with each other, and
said group selection means calculates a similarity between each of said first sets of pieces of preference information included in said acquired said group list and a set of pieces of preference information stored in said preference information storage means corresponding to said pieces of behavior information stored in said behavior information storage means, and selects a group ID associated with a first set of pieces of preference information having a high similarity.

6. The information collection system according to claims 4 or 5, wherein
said user terminal further comprises a user permission determination means for making a user determine whether or not to permit said user terminal to hold a group ID selected by said group selection means and, if decision of the permission is given, selecting said selected group ID.

7. An information collection program for causing a computer, the computer comprising
a behavior information storage means for storing a group ID and pieces of behavior information acquired from a user terminal in association with each other,
a group information storage means for storing said group ID and a first set of pieces of preference information in association with each other, and
a preference information storage means for storing a piece of behavior information and a second set of pieces of preference information in association with each other,
to execute:
a group information update step for updating said first set of pieces of preference information associated with said group ID stored in said group information storage means, on the basis of said pieces of behavior information stored in said behavior information storage means and said second sets of pieces of preference information corresponding to respective said pieces of behavior information stored in said preference information storage means; and
a group list generation/sending step for calculating a similarity between said first set of pieces of preference information corresponding to said group ID acquired from said user terminal and said first set of pieces of preference information corresponding to each of all group IDs stored in said group information storage means, acquiring a group ID associated with said first set of pieces of preference information having a similarity equal to or larger than a predetermined value from said group information storage means, and generating and sending a group list including said acquired group ID to said user terminal.

8. The information collection program according to claim 7 for causing said computer to further execute
said group list generation/sending step for generating said group list by extracting said first set of pieces of preference information associated with said group ID included in said group list from said group information storage means, and by associating said extracted first set of pieces of preference information with said group ID.

9. An information collection method comprising:
storing a group ID and pieces of behavior information acquired from a user terminal in association with each other, into a behavior information storage means;
storing said group ID and a first set of pieces of preference information in association with each other, into a group information storage means;
storing a piece of behavior information and a second set of pieces of preference information in association with each other, into a preference information storage means;
updating said first set of pieces of preference information associated with said group ID stored in said group information storage means, on the basis of said pieces of behavior information stored in said behavior information storage means and said second sets of pieces of preference information corresponding to respective said pieces of behavior information stored in said preference information storage means; and
calculating a similarity between said first set of pieces of preference information corresponding to said group ID acquired from said user terminal and said first set of pieces of preference information corresponding to each of all group IDs stored in said group information storage means, acquiring a group ID associated with said first set of pieces of preference information having a similarity equal to or larger than a predetermined value from said group information storage means, and generating and sending a group list including said acquired group ID to said user terminal.

10. The information collection method according to claim 9 further comprising
generating said group list by extracting said first set of pieces of preference information associated with said group ID included in said group list from said group information storage means, and by associating said extracted first set of pieces of preference information with said group ID.
